# EUROPEAN PATENT SPECIFICATION

(11) **EP 2 536 979 B1**
(45) Date of publication and mention of the grant of the patent: **18.12.2013**
(21) Application number: 10709589.5
(22) Date of filing: 15.02.2010
(51) Int. Cl.: F24F 5/00, F24F 13/30, F25B 39/04, F28C 1/14, F28D 5/02

(54) **COMPOUND CONDENSING UNIT FOR COOLING SYSTEM**
VERBINDUNGSKONDENSATIONSEINHEIT FÜR EIN KÜHLSYSTEM
UNITÉ DE CONDENSATION DU TYPE COMPOUND POUR SYSTÈME DE REFROIDISSEMENT

(43) Date of publication of application: 26.12.2012
(73) Proprietor: Thipchuwong, Nopparat, Bangkok 10900 (TH); Kriangkanont, Malee, Saimai, Bangkok 10220 (TH)
(72) Inventor: Thipchuwong, Nopparat, Bangkok 10900 (TH); Kriangkanont, Malee, Saimai, Bangkok 10220 (TH)
(74) Representative: Dennemeyer & Associates S.A.
(86) International application number: PCT/TH2010/000005
(87) International publication number: WO 2011/099944

(56) References cited:
- WO-A1-2004/063634
- DE-C- 648 016
- US-A1- 2003 145 619
- US-B1- 6 595 011

## Description

### TECHNICAL FIELD AND INDUSTRIAL APPLICABILITY OF THE INVENTION

This invention relates to a compound condensing unit having a cooling tower, a water-cooled condenser, a compressor, controlling components combined into one single unit where cooling medium using water is more efficient than air used conventionally.

### Field of the Invention

Combined condensing unit for air-conditioning and/or cooling system

### Description of Related Art

The present invention relates to a compound condensing system using combination of a water cooled condenser, a cooling tower, a compressor and many other controlling components to integrate into one single unit. This helps saving of electrical energy, prolonging the use of compressor, in addition to minimize global warming.

### BACKGROUND OF THE INVENTION

Cooling of a air-conditioning system using water is more efficient than the one using air for cooling (see for example patent document US-A-2003/014561P). One important point is that water must be moved to a cooling tower to cool down. Therefore, it would be beneficial to combine a water-cooled condenser, a cooling tower, a compressor and other controlling components into one single unit to make it more convenient for operation. By increasing the number of water cooling pads to meet the requirement for cooling temperature of water to dew point or close to dew point will help saving the electrical energy, prolonging the life of compressor and minimizing global warming. Evaporation of water moves heat from air and water thus lowers the temperature of air or water vapor or water controllable to be lower than the ambient temperature. Water is cooled down by passing through a coil of condenser. Water vapor then moves higher to upper level brought with it the latent heat. When the mist becomes dense enough, it condenses into droplets and falls down as it gives out heat to air or gas at the upper level.

### SUMMARY OF THE INVENTION

Combination of a water cooled condenser, a cooling tower, a compressor and many other controlling components to integrate into one single unit of a compound condensing system makes it much more efficient in operation. Layer arrangement is constructed where reshuffled or rearrangement is possible to give similar outcome. This also helps saving of electrical energy, prolonging the life of compressor, in addition to minimize global warming.

### BRIEF DESCRIPTION OF THE DRAWINGS

FIG. 1 is a compound condensing unit showing all the components.
FIG. 2 (a) is top view of a round tray with pores, (b) is a perspective view of round tray, (c) is conduit for flow of refrigerant and, (d) conduit is placed in the round tray;
FIG. 3 shows components and their arrangement in the compound condensing unit.
FIG. 4 shows combining of floor S1 and S2 of compound condensing unit of FIG. 1 to one single floor S1.2.
FIG. 5 is water reservoir showing side view and various isometric views.
FIG. 6 shows overall diagrams 2 versions of compound condensing unit comparing the one having two floors S1 and S2 with the one with S 1.2.
FIG. 7 shows front view of compound condensing unit arranged horizontally.
FIG. 8 shows back view of FIG 7.
FIG. 9 shows side view of FIG 7.
FIG. 10 shows top view of FIG 7.
FIG. 11 shows rearrangement by moving floor S3 to position between floors S5 and S6.
FIG. 12 shows rearrangement by moving part F2 to position between parts F3 and F4.
FIG. 13 shows rearrangement by removing sieved tray of floor S3 and placing refrigerant conduit under water at bottom of floor S1.
FIG. 14 shows rearrangement of components as of FIG. 8 by removing sieved tray of floor F2 and placing refrigerant conduit under water at bottom of floor F1.

### DETAILED DESCRIPTION OF THE PREFERRED EMBODIMENTS

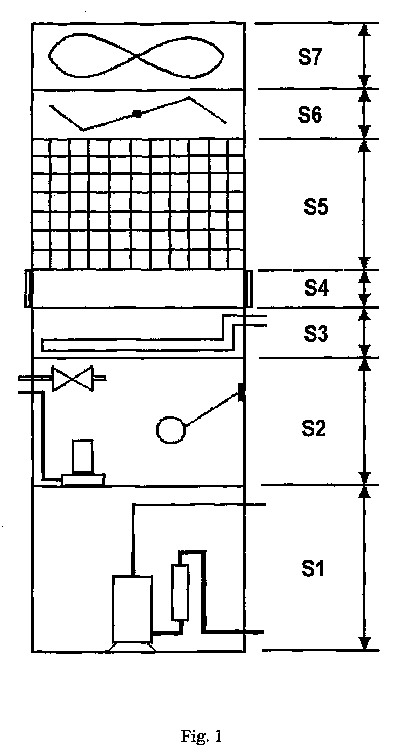

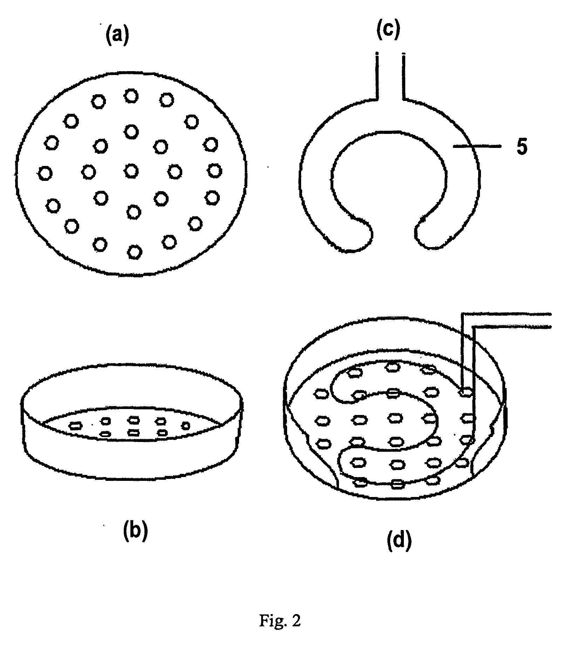

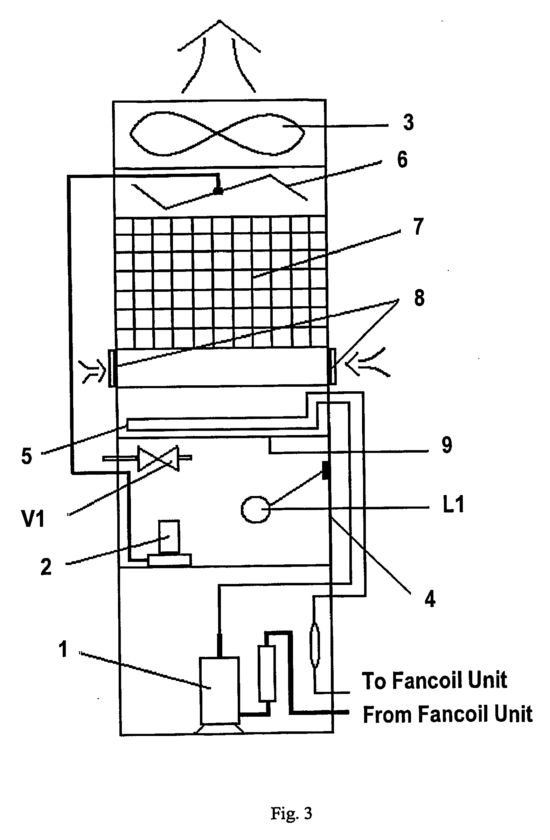

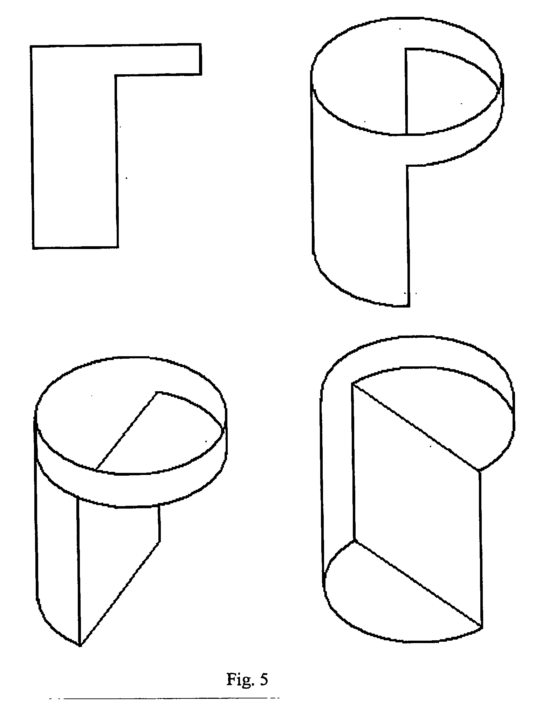

The presently disclosed compound condensing unit is invented by applying the operation principle and combining all the components having a cooling tower, a water-cooled condenser, a compressor, controlling components into one single unit as shown in FIG.1 in a cylindrical tower or a rectangular tower where the tower is divided into several floors having the components in each floor shown in FIG.1 and FIG. 3, as follows:
Floor S1: having a compressor 1 and controlling components;
Floor S2: is a cylindrical water reservoir 4, at the bottom of the reservoir there is a water pump 2 to circulate water within the system for cooling, and a floating level switch 10 for controlling the water level in the reservoir by turning on and off the electric valve 11 to fill water in to the preset level; where water reservoir 4 can be designed differently as in FIG. 5.
Floor S3: is the refrigerant conduit 5 functions as water-cooling condenser occupying the whole area of a round sieve 9 having pores at the bottom to allow flow of water through as shown in FIGs. 2 (a), (b), (c) and (d);
Floor S4: is an empty cylinder with enough height, having a lot of holes 8 all along its wall with air-filter along the wall to allow flow of air through;
Floor S5: consists of cooling pads 7 filling the whole space to splash water on to increase surface area for evaporation of water;
Floor S6: consists of a sprinkler 6 to sprinkle water throughout the cooling pad 7;
Floor S7: consists of a fan 3 to draw air from floor S4 to flow up against the direction of water droplets which drop down in floor 5 to cool down the water droplet and lower the water temperature to dew point where air is sucked out by the fan at the top of the tower of this compound condensing unit.

The operation of the compound condensing unit is as follows:
As shown in FIG. 3, valve V1 is turned on to allow water to fill the water reservoir 4 where water level is controlled by level switch L1 by controlling the turning on and off of valve V1. Once the air-conditioner is on, compressor 1, water pump 2 and fan 3 are turned on simultaneously. Compressor 1 compresses refrigerant to flow into conduit 5 to cause increase in temperature of the refrigerant, while water pump 2 pumps water from reservoir 4 up to sprinkler 6 to sprinkle water to cover cooling pads 7 to drip downward against the direction of air flow upward by sucking action of fan 3 through holes 8 to expel out at the top of the tower. This decreases the temperature of water to dew point at that particular time point. Water droplets then drip down to cool the refrigerant conduit 5 where it turns into warm water and flows out through sieve 9 back to reservoir 4 to complete the cycle. Water pump 2 then pumps water up to sprinkler 3 to start the next cycle.

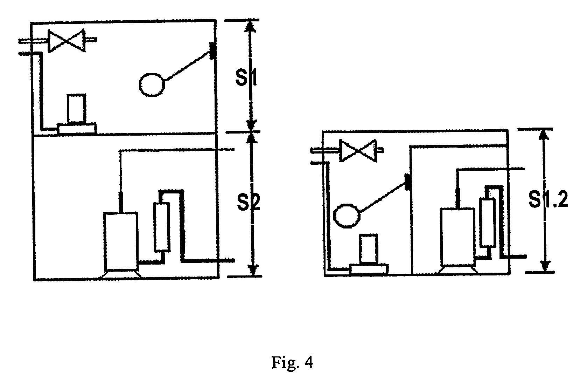

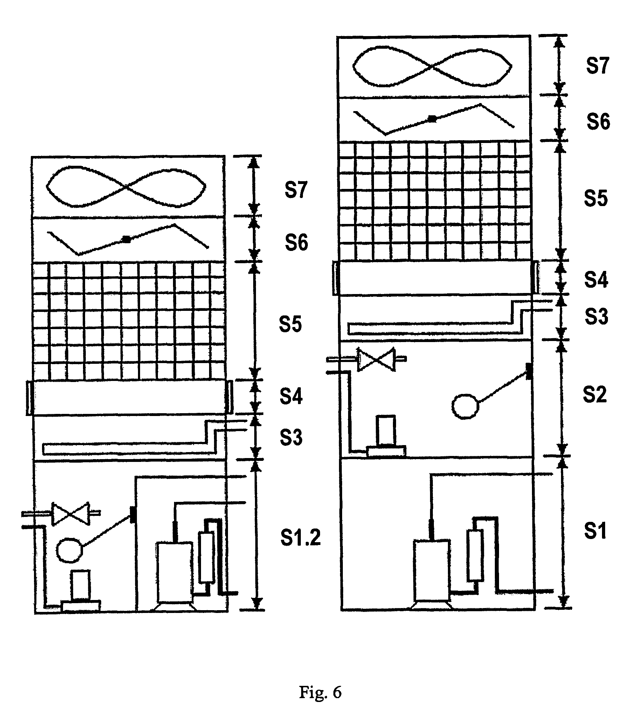

FIG. 4 shows how floors S1 and S2 as of FIG.1 are combined to make floor S1.2 to reduce the height of the tower. By designing the water reservoir having its lower part as half cylinder and its upper part is full cylinder about 2-3 inches in height to be able to receive all the water drips down as shown in FIG.5. The lower half cylinder space is to install the compressor and all other controlling devices. The height of floor S1.2 is shorter than the sum of floors S 1 and S2, thus helps decreasing the height of this compound condensing unit shown in FIG. 6.

The feature and operation of the compound condensing unit of the present invention, using water at low-temperature (i.e. at dew point) to cool down the warm refrigerant is more efficient than air-cooling. Using the fin coil refrigerant conduit is thus not necessary. The ordinary copper coil with much shorter length can be used. This reduces the cost of manufacturing. In addition, the low temperature at the dew point of water is much lower than that of the ambient temperature of air thus allows decrease of pressure of refrigerant in the system. The compressor operates at lower load thus electrical consumption is reduced, this lengthens the life of compressor, in addition to maximizing the efficiency of the cooling system.

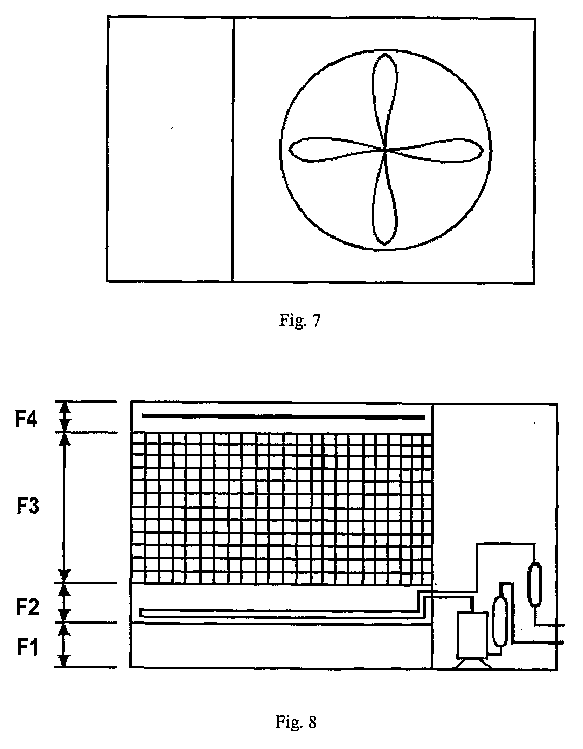

The build of the compound condensing unit as rectangular box lies horizontally is shown in FIGs. 7, 8, 9 and 10. FIG. 7 is front view of the unit installing a fan where to the left is a chamber installing a compressor and controlling components. FIG. 8 is back view of the unit. All the components are arranged and operate as follows:

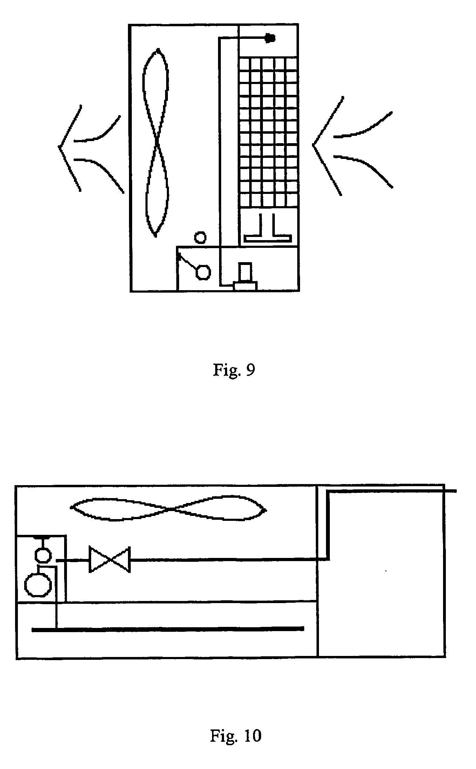

Floor F1 is a tray having cross-section area (width x length) sufficiently enough to receive all the water drips down from floor F2 and is high enough to contain all the water needs to circulate in the system, where the left side end is extended to the anterior having the same width and height but just enough length to install the water pump, level switch and water inlet controlled by an electrical valve which is controlled by a level switch as in FIG. 9 and FIG. 10.

Floor F2 consists of a refrigerant conduit functions as a water-cooled condenser placed in a sieve-bottom rectangular tray having area large enough to receive all the water drips down from floor F3 and with enough height that water does not splash out, and that water can flow through the pores at the bottom of the sieve-tray.

Floor F3 consists of cooling pad filling the total area large enough to allow complete cooling of the warm water drips down from floor F4 to reduce temperature of water to dew point before reaching floor F2. The cross-section of the compound condensing unit is thus equal to the cross-section area of the cooling pad.

Floor F4 consists of sprinkler installed to sprinkle water to cover the whole area of cooling pad.

FIG. 9 is the left-side view of a compound condensing unit showing how air is sucked by fan to cool down water droplets where the extended area of tray to contain water of floor F1 to install water pump, level switch and water inlet. This also shows how water is pumped by the water pump to sprinkler at Floor F4, the thickness (width) and the height of each floor and the positions the components are installed sidewise of the compound condensing unit.

The top view of the unit is shown in FIG.10, showing the length of the tray of floor F1 with its extending part to installed water pump, level switch, water inlet and water valve and the layout of the components as a whole of the disclosed compound condensing unit.

The principle of operation of the rectangular type horizontally arranged compound condensing unit is similar to that of the cylindrical type or rectangular type vertically arranged.

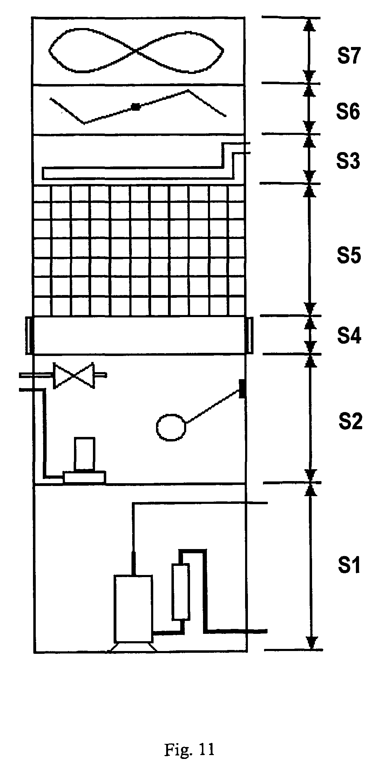

FIG. 11 is the rearrangement of the components of compound condensing unit of FIG. 1 or FIG. 6 by moving floor S3 to a position between floors S5 and S6, operation is then switching from; first, cooling down the temperature of water then lower the temperature of refrigerant later; to first, cooling the refrigerant and later cool down water. Yet, the outcome is similar.

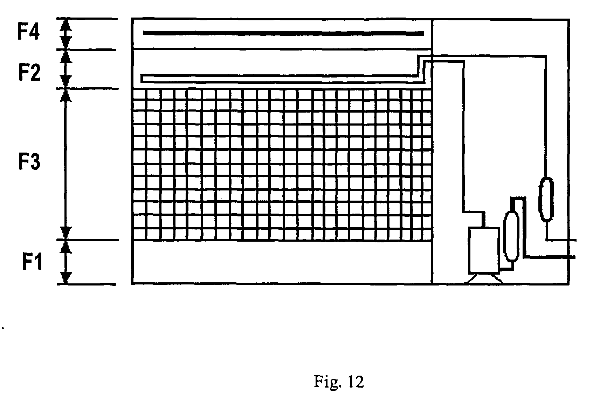

Similarly, floor F2 as in FIG.8 can be moved to a position between floor F3 and F4, shown in FIG. 12 resulting in similar outcome as described in FIG.11.

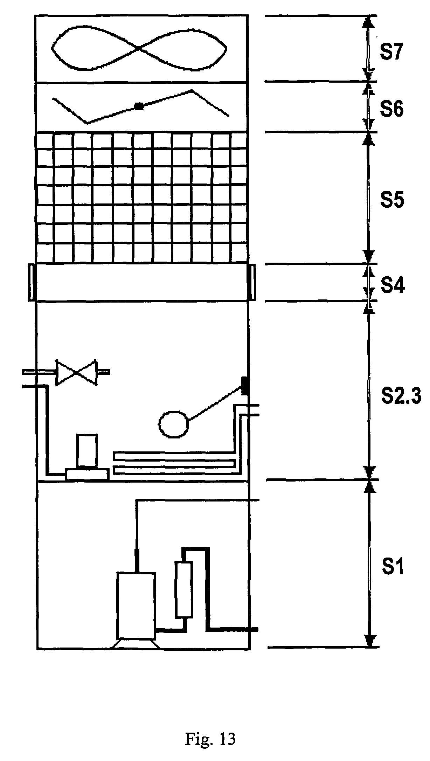

As shown in FIG.13, components of FIG. 1 are rearranged by deleting the sieve-tray of S3 and move refrigerant conduit 5 to place under the water at the bottom of water reservoir of floor S2, where operation is the same as floors S2 and S3 are combined to be floor S2.3.

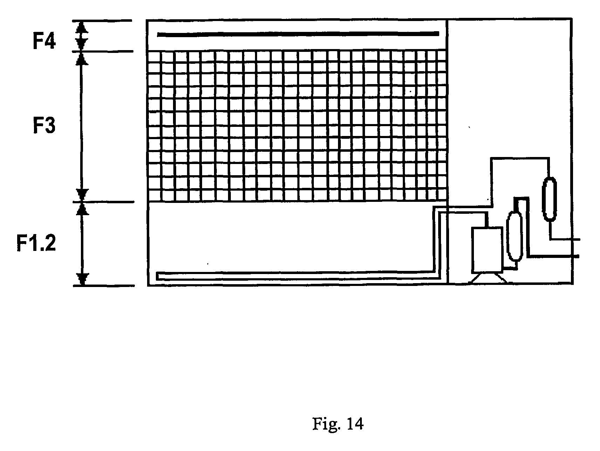

FIG. 14 shows how floor F2 is deleted and refrigerant conduit 5 is placed under the water at the bottom of water reservoir of floor F1, where operation is the same as floors F1 and F2 are combined to be floor F1.2.

## Claims

1. A compound condensing unit of a cooling system comprising:
a water-cooled condenser (5), a cooling tower, a compressor (1), controlling components mounted into one single unit in layer arrangement where from lowest to upmost having floors arranged as follows:
a lowest floor (51) comprises a compressor (1) and controlling components;
a second floor (52) having a water reservoir (4) with a water pump (2) mounted inside, a level switch (10) and a water inlet having an electrical water valve (11).
a third floor (53) having refrigerant conduit (5) placed in a tray with sieved bottom;
a fourth floor (54) with porous wall having air-filter all along the area of the wall;
a fifth floor (55) having cooling pad (7) covers the whole area of floor;
a sixth floor (56) having a water sprinklert (6);
a seventh floor (57) which is the uppermost floor having a fan (3).

2. A compound condensing unit of a cooling system of claim 1, where lowest floor (51) and second floor (52) can be combined or rearranged to function similarly.

3. Method for constructing a compound condensing unit of a cooling system according to claim 1 comprising:
combining a water-cooled condenser (5), a cooling tower, a compressor (1), controlling components mounted into one single unit in layer arrangement where from lowest to upmost having floors arranged as follows:
a lowest floor (51) comprises a compressor (1) and controlling components;
a second floor (52) having a water reservoir (4) with a water pump (2) mounted inside, a level switch (10) and a water inlet having an electrical water valve (11); a third floor (53) having refrigerant conduit (5) placed in a tray with sieved bottom;
a fourth floor (5a) is a room with porous wall having air-filter all along the area of the wall;
a fifth floor (55) having cooling pad (7) covers the whole space of floor;
a sixth floor (56) having a water sprinkler (6);
a seventh floor (57) which is the uppermost floor having a fan (3).

4. Method for operating a compound condensing unit of a cooling system of claim 1, comprising: steps of
filling water to reservoir (4) where the water level is controlled by level switch (10); turning on compressor (1) water pump (2), and fan (3) simultaneously;
pumping water to sprinkler (6) to splash onto cooling pad (7) of fifth floor and drip down as water droplet in a opposite direction to air flow sucked up by said fan at uppermost floor;
dripping down of water droplet cooled to cover refrigerant conduit (5) and cooling down the refrigerant;
passing of water through said sieved tray back to water reservoir (4) to be pumped back up in a next cycle.

## Patentansprüche

1. Verbundkondensiereinheit eines Kühlsystems, umfassend:
einen wassergekühlten Kondensator (5), einen Kühlturm, einen Kompressor (1), Steuerkomponenten, die in eine einzelne Einheit in Schichtanordnung angebracht sind, wobei die unterste bis zur obersten die wie folgt angeordneten Ebenen aufweisen:
eine unterste Ebene (S1), die einen Kompressor (1) und Steuerkomponenten umfasst;
eine zweite Ebene (S2) mit einem Wasserreservoir (4) mit einer im Inneren angebrachten Wasserpumpe (2), einem Niveauschalter (10) und einem Wassereinlass mit einem elektrischen Wasserventil (11);
eine dritte Ebene (S3) mit einer Kältemittelleitung (5), die in einer Ablage mit gesiebtem Boden platziert ist:
eine vierte Ebene (S4) mit einer porösen Wand mit Luftfilter entlang des gesamten Wandbereichs;
eine fünfte Ebene (S5) mit einem Kühlkissen (7), das den gesamten Ebenenbereich bedeckt;
eine sechste Ebene (S6) mit einem Wassersprinkler (6);
eine siebte Ebene (S7), die die oberste Ebene ist und einen Lüfter (3) aufweist.

2. Verbundkondensiereinheit eines Kühlsystems nach Anspruch 1, wobei die unterste Ebene (S1) und die zweite Ebene (S2) kombiniert oder neu angeordnet werden können, um ähnlich zu funktionieren.

3. Verfahren zum Konstruieren einer Verbundkondensiereinheit eines Kühlsystems nach Anspruch 1, umfassend:
Kombinieren eines wassergekühlten Kondensators (5), eines Kühlturms, eines Kompressors (1), von Steuerkomponenten, die in eine einzelne Einheit in Schichtanordnung angebracht sind, wobei die unterste bis zur obersten die wie folgt angeordneten Ebenen aufweisen:
eine unterste Ebene (S1), die einen Kompressor (1) und Steuerkomponenten umfasst;
eine zweite Ebene (S2) mit einem Wasserreservoir (4) mit einer im Inneren angebrachten Wasserpumpe (2), einem Niveauschalter (10) und einem Wassereinlass mit einem elektrischen Wasserventil (11); eine dritte Ebene (S3) mit einer Kältemittelleitung (5), die in einer Ablage mit gesiebtem Boden platziert ist;
eine vierte Ebene (S4), die ein Raum mit einer porösen Wand mit Luftfilter entlang des gesamten Wandbereichs ist;
eine fünfte Ebene (S5) mit einem Kühlkissen (7), das den gesamten Ebenenbereich bedeckt;
eine sechste Ebene (S6) mit einem Wassersprinkler (6);
eine siebte Ebene (S7), die die oberste Ebene ist und einen Lüfter (3) aufweist.

4. Verfahren zum Betreiben einer Verbundkondensiereinheit eines Kühlsystems nach Anspruch 1, das die Schritte umfasst:
Füllen von Wasser in das Reservoir (4), wobei der Wasserspiegel vom Niveauschalter (10) geregelt wird;
gleichzeitiges Einschalten des Kompressors (1), der Wasserpumpe (2) und des Lüfters (3);
Pumpen von Wasser in den Sprinkler (6), so dass dieses auf das Kühlkissen (7) der fünften Ebene spritzt und als Wassertropfen in eine entgegengesetzte Richtung einer Luftströmung nach unten tropft, die vom Lüfter in der obersten Ebene hochgesaugt wird;
Hinuntertropfenlassen eines gekühlten Wassertropfens, um die Kältemittelleitung (5) zu bedecken, und Abkühlen des Kältemittels;
Leiten von Wasser durch die gesiebte Ablage zurück zum Wasserreservoir (4), um zurück in einen nächsten Zyklus gepumpt zu werden.

## Revendications

1. Unité de condensation composite d'un système de refroidissement comprenant :
un condenseur refroidi par eau (5), une tour de refroidissement, un compresseur (1), des composants de commande montés dans une unité unique en un agencement en couches comportant du plus bas au plus haut des planchers agencés comme suit :
un plancher le plus bas (S1) comprenant un compresseur (1) et des composants de commande ;
un deuxième plancher (S2) comportant un réservoir d'eau (4) à l'intérieur duquel une pompe à eau (2) est montée, un commutateur de niveau (10) et une entrée d'eau comportant une électrovanne d'eau (11) ;
un troisième plancher (S3) comportant un conduit de fluide frigorigène (5) placé dans un plateau avec un fond criblé ;
un quatrième plancher (S4) avec une paroi poreuse comportant un filtre à air tout le long de la surface de la paroi ;
un cinquième plancher (S5) comportant des panneaux de refroidissement (7) recouvrant la surface entière du plancher ;
un sixième plancher (S6) comportant un gicleur d'eau (6) ;
un septième plancher (S7) qui est le plancher le plus haut comportant un ventilateur (3).

2. Unité de condensation composite d'un système de refroidissement selon la revendication 1, dans laquelle le plancher le plus bas (S1) et le deuxième plancher (S2) peuvent être combinés ou réarrangés pour fonctionner de manière similaire.

3. Procédé pour construire une unité de condensation composite d'un système de refroidissement selon la revendication 1, comprenant :
la combinaison d'un condenseur refroidi par eau (5), d'une tour de refroidissement, d'un compresseur (1), de composants de commande montés dans une unité unique en un agencement en couches comportant du plus bas au plus haut des planchers agencés comme suit :
un plancher le plus bas (S1) comprenant un compresseur (1) et des composants de commande ;
un deuxième plancher (S2) comportant un réservoir d'eau (4) dans lequel une pompe à eau (2) est montée, un commutateur de niveau (10) et une entrée d'eau comportant une électrovanne d'eau (11) ;
un troisième plancher (S3) comportant un conduit de fluide frigorigène (5) placé dans un plateau avec un fond criblé ;
un quatrième plancher (S4) qui est une chambre avec une paroi poreuse comportant un filtre à air tout le long de la surface de la paroi ;
un cinquième plancher (S5) comportant des panneaux de refroidissement (7) recouvrant l'espace entier du plancher ;
un sixième plancher (S6) comportant un gicleur d'eau (6) ;
un septième plancher (S7) qui est le plancher le plus haut comportant un ventilateur (3).

4. Procédé pour mettre en oeuvre une unité de condensation composite d'un système de refroidissement selon la revendication 1, comprenant les étapes :
de remplissage avec de l'eau du réservoir (4) dans lequel le niveau d'eau est commandé par le commutateur de niveau (10) ;
de mise en marche du compresseur (1), de la pompe à eau (2) et du ventilateur (3) simultanément ;
de pompage de l'eau vers le gicleur (6) pour qu'elle asperge le panneau de refroidissement (7) du cinquième plancher et qu'elle s'écoule en tant que gouttelettes d'eau dans une direction opposée à une circulation de l'air aspiré par ledit ventilateur sur le plancher le plus haut ;
d'écoulement de gouttelettes d'eau refroidies pour recouvrir un conduit de fluide frigorigène (5) et de refroidissement du fluide frigorigène ;
de passage de l'eau à travers ledit plateau criblé de retour dans le réservoir d'eau (4) pour qu'elle soit de nouveau pompée pendant un cycle suivant.
